# EUROPEAN PATENT APPLICATION

(11) **EP 4 568 400 A1**
(43) Date of publication of application: **11.06.2025**
(21) Application number: 23849216.9
(22) Date of filing: 19.07.2023
(51) Int. Cl.: H04W 74/00

(54) **PREAMBLE SEQUENCE SENDING METHOD, PREAMBLE SEQUENCE RECEIVING METHOD, APPARATUS AND STORAGE MEDIUM**

(30) Priority: 03.08.2022 CN 202210927160
(71) Applicant: Datang Mobile Communications Equipment Co., Ltd., Beijing 100085 (CN)
(72) Inventor: ZHANG, Yujie, Beijing 100085 (CN); BAI, Wei, Beijing 100085 (CN)
(74) Representative: Studio Torta S.p.A.
(86) International application number: PCT/CN2023/108255
(87) International publication number: WO 2024/027508

(57) **Abstract**

The present disclosure provides preamble sequence sending and receiving methods and apparatuses and a storage medium. The method includes: determining M random access channel occasions (ROs) based on detected synchronization signal blocks (SSBs), where M is an integer greater than 1; and sending preamble sequences on the M ROs, where the preamble sequences carry additional bits generated based on informational bits, thereby improving the performance of preamble sequences.

## Description

This disclosure claims priority to Chinese Patent Application No. 202210927160.5, filed with the China National Intellectual Property Administration on August 03, 2022 and entitled "PREAMBLE SEQUENCE SENDING AND RECEIVING METHODS, APPARATUSES AND STORAGE MEDIUM", which is hereby incorporated by reference in its entirety.

### TECHNICAL FIELD

The present disclosure relates to the field of communication technology and, in particular, to preamble sequence sending and receiving methods and apparatuses, and a storage medium.

### BACKGROUND

With the development and evolution of mobile communication, multiple international organizations are beginning to research a new wireless communication system, i.e., 6G system. The increase in the number of connected devices is one of the key drivers for 6G, and initial access and data transmission of a massive number of terminals will be limited by coordination resources of networks.

Uncoordinated random access and transmission (Uncoordinated Random Access and Transmission, URAT) technology can support a massive number of terminals because it requires no or very little coordination resources. However, in the URAT technology, an access process and a data transmission process of a terminal are carried out together, which requires a preamble sequence (Preamble) to be associated with a physical uplink shared channel (Physical Uplink Shared Channel, PUSCH), that is, the preamble is required to carry data information related to the PUSCH. The performance of PUSCH is affected by the performance of the preamble sequence, and only when the preamble sequence is correctly decoded can the PUSCH be decoded. Therefore, how to improve the performance of the preamble is an urgent problem to be solved.

### SUMMARY

The present disclosure provides preamble sequence sending and receiving methods and apparatuses and a storage medium, which improve the performance of the preamble sequence.

In a first aspect, the present disclosure provides a preamble sequence sending method, including:
determining M random access channel occasions (ROs) based on detected synchronization signal blocks (SSBs), where M is an integer greater than 1; and
sending preamble sequences on the M ROs, where the preamble sequences carry additional bits generated based on information bits.

In an implementation, the determining the M random access channel occasions (ROs) based on the detected synchronization signal blocks (SSBs) includes:
selecting X SSBs from the detected SSBs at least based on synchronization signal-reference signal received powers (SS-RSRPs) of the detected SSBs, where X is an integer greater than or equal to 1, and X is preset, or configured by a network device, or agreed upon by a protocol, or determined by a terminal; and
determining the M ROs based on the X SSBs and a mapping relationship between SSBs and ROs, where M is preset, or configured by a network device, or agreed upon by a protocol, or determined by a terminal.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, the X SSBs represent X SSBs with highest SS-RSRPs among all SSBs, or the X SSBs represent X SSBs whose SS-RSRPs exceed a preset threshold.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold;
the determining the M ROs based on the X SSBs and the mapping relationship between the SSBs and the ROs includes:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs associated with each RO is, where N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
the determining the M ROs based on the X SSBs and the mapping relationship between the SSBs and the ROs includes:
determining K ROs corresponding to the X SSBs based on the mapping relationship between the SSBs and the ROs, and if K is equal to M, determining the K ROs as the M ROs.

In an implementation, the method further includes:
if K is less than M, continuing to select an RO corresponding to an SSB with a highest SS-RSRP among other SSBs than the X SSBs until the M ROs are determined; or,
if K is less than M, selecting consecutive M-K ROs after the K ROs to obtain the M ROs.

In an implementation, the preamble sequences on the M ROs are the same, and the preamble sequences carry all information of the additional bits.

In an implementation, the preamble sequences on the M ROs are not completely the same, and each preamble sequence carries part of information of the additional bits.

In an implementation, the sending the preamble sequences on the M ROs includes:
sending L preamble sequences on the M ROs, where L is the number of segments of the additional bits, and L is less than or equal to M, and each preamble sequence in the L preamble sequences carries a segment of the additional bits, where L is preset, or configured by a network device, or agreed upon by a protocol, or determined by a terminal.

In an implementation, L is calculated based on M, or M is calculated based on L.

Optionally, L is M divided by P and rounded up to a nearest integer, and P is preset, or configured by a network device, or agreed upon by a protocol, or determined by a terminal.

Optionally, M is L multiplied by P, and P is preset, or configured by a network device, or agreed upon by a protocol, or determined by a terminal.

In an implementation, the information bits include user identity information and user data information.

In a second aspect, the present disclosure provides a preamble sequence receiving method, including:
determining one or more RO combinations, where the RO combination includes M ROs, where M is an integer greater than 1; and
performing reception processing of preamble sequences on each RO combination, where the preamble sequences carry additional bits generated based on information bits.

In an implementation, the determining the one or more RO combinations includes:
determining one or more SSB combinations, where the SSB combination includes X SSBs, where X is an integer greater than or equal to 1; and
determining the RO combination based on the X SSBs and a mapping relationship between SSBs and ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the determining the RO combination based on the X SSBs and the mapping relationship between the SSBs and the ROs includes:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs associated with each RO is N, where N is greater than or equal to 1, then X is equal to M;
the determining the RO combination based on the X SSBs and the mapping relationship between the SSBs and the ROs includes:
determining K ROs corresponding to the X SSBs based on the mapping relationship between the SSBs and the ROs, and if K is equal to M, determining the K ROs as the M ROs.

In an implementation, the method further includes:
if K is less than M, continuing to select an RO corresponding to other SSB than the X SSBs, until the M ROs are determined; or,
if K is less than M, selecting consecutive M-K ROs after the K ROs to obtain the M ROs.

In an implementation, the method further includes:
sending the number M of ROs to a terminal, where M is used to indicate sending the preamble sequences on M ROs.

In an implementation, the method further includes:
sending the number X of SSBs to a terminal, where X is used to indicate determining M ROs for sending the preamble sequences based on X SSBs.

In an implementation, the method further includes:
sending the number L of segments of the additional bits to a terminal, where L is an integer greater than 1, and L is used to indicate that each preamble sequence carries 1/L of the additional bits.

In an implementation, L is calculated based on M, or M is calculated based on L.

In an implementation, the method further includes:
solving for the additional bits carried by the preamble sequences after receiving the preamble sequences.

In an implementation, the information bits include user identity information and user data information.

In a third aspect, the present disclosure provides a preamble sequence sending apparatus, including: a memory, a transceiver and a processor;
the memory is configured to store a computer program;
the transceiver is configured to send and receive data under control of the processor;
the processor is configured to read the computer program stored in the memory and execute the following operations:
   determining M random access channel occasions (ROs) based on detected synchronization signal blocks (SSBs), where M is an integer greater than 1; and
   sending preamble sequences on the M ROs, where the preamble sequences carry additional bits generated based on information bits.

In an implementation, the processor is configured to execute the following operations:
selecting X SSBs from the detected SSBs at least based on synchronization signal-reference signal received powers (SS-RSRPs) of the detected SSBs, where X is an integer greater than or equal to 1, and X is preset, or configured by a network device, or agreed upon by a protocol, or determined by a terminal; and
determining the M ROs based on the X SSBs and a mapping relationship between SSBs and ROs, where M is preset, or configured by a network device, or agreed upon by a protocol, or determined by a terminal.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, the X SSBs represent X SSBs with highest SS-RSRPs among all SSBs, or the X SSBs represent X SSBs whose SS-RSRPs exceed a preset threshold.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold;
the processor is configured to execute the following operations:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs mapped by each RO is N, where N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
the processor is configured to execute the following operation:
determining K ROs corresponding to the X SSBs based on the mapping relationship between the SSBs and the ROs, and if K is equal to the M, determining the K ROs as the M ROs.

In an implementation, the processor is configured to execute the following operation:
if K is less than M, continuing to select an RO corresponding to an SSB with a highest SS-RSRP among other SSBs than the X SSBs until the M ROs are determined; or,
if K is less than M, selecting consecutive M-K ROs after the K ROs to obtain the M ROs.

In an implementation, the preamble sequences on the M ROs are the same, and the preamble sequences carry all information of the additional bits.

In an implementation, the preamble sequences on the M ROs are not completely the same, and each preamble sequence carries part of information of the additional bits.

In an implementation, the processor is configured to execute the following operation:
sending L preamble sequences on the M ROs, where L is the number of segments of the additional bits, and L is less than or equal to M, and each preamble sequence in the L preamble sequences carries a segment of the additional bits, where L is preset, or configured by a network device, or agreed upon by a protocol, or determined by a terminal.

In an implementation, L is calculated based on M, or M is calculated based on L.

In an implementation, the information bits include user identity information and user data information.

In a fourth aspect, the present disclosure provides a preamble sequence receiving apparatus, including: a memory, a transceiver and a processor;
the memory is configured to store a computer program;
the transceiver is configured to send and receive data under control of the processor;
the processor is configured to read the computer program stored in the memory and execute the following operations:
   determining one or more RO combinations, where the RO combination includes M ROs, where M is an integer greater than 1; and
   performing reception processing of preamble sequences on each RO combination, where the preamble sequences carry additional bits generated based on information bits.

In an implementation, the processor is configured to execute the following operations:
determining one or more SSB combinations, where the SSB combination includes X SSBs, where X is an integer greater than or equal to 1; and
determining the RO combination based on the X SSBs and a mapping relationship between SSBs and ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the processor is configured to execute the following operations:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs mapped by each RO is N, where N is greater than or equal to 1, then X is equal to M;
the processor is configured to execute the following operation:
determining K ROs corresponding to the X SSBs based on the mapping relationship between the SSBs and the ROs, and if K is equal to M, determining the K ROs as the M ROs.

In an implementation, the processor is configured to execute the following operation:
if K is less than M, continuing to select an RO corresponding to other SSB than the X SSBs, until the M ROs are determined; or,
if K is less than M, selecting consecutive M-K ROs after the K ROs to obtain the M ROs.

In an implementation, the processor is configured to execute the following operation:
sending the number M of ROs to a terminal, where M is used to indicate sending the preamble sequences on M ROs.

In an implementation, the processor is configured to execute the following operation:
sending the number X of SSBs to a terminal, where X is used to indicate determining M ROs for sending the preamble sequences based on X SSBs.

In an implementation, the processor is configured to execute the following operation:
sending the number L of segments of the additional bits to a terminal, where L is an integer greater than 1, and L is used to indicate that each preamble sequence carries 1/L of the additional bits.

In an implementation, L is calculated based on M, or M is calculated based on L.

In an implementation, the processor is configured to execute the following operation:
solving for the additional bits carried by the preamble sequences after receiving the preamble sequences.

In an implementation, the information bits include user identity information and user data information.

In a fifth aspect, the present disclosure provides a preamble sequence sending apparatus, including:
a processing unit, configured to determine M random access channel occasions (ROs) based on detected synchronization signal blocks (SSBs), where M is an integer greater than 1; and
a sending unit, configured to send preamble sequences on the M ROs, where the preamble sequences carry additional bits generated based on information bits.

In an implementation, the processing unit is configured to :
select X SSBs from the detected SSBs at least based on synchronization signal-reference signal received powers (SS-RSRPs) of the detected SSBs, where X is an integer greater than or equal to 1, and X is preset, or configured by a network device, or agreed upon by a protocol, or determined by a terminal; and
determine the M ROs based on the X SSBs and a mapping relationship between SSBs and ROs, where M is preset, or configured by a network device, or agreed upon by a protocol, or determined by a terminal.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, the X SSBs represent X SSBs with highest SS-RSRPs among all SSBs, or the X SSBs represent X SSBs whose SS-RSRPs exceed a preset threshold.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold;
the processing unit is configured to :
determine a first RO corresponding to the X SSBs based on the mapping relationship between the SSBs and the ROs; and
select consecutive M ROs starting from the first RO.

In an implementation, if the number of ROs mapped by each SSB is 1 and the number of SSBs mapped by each RO is N, where N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
the processing unit is configured to :
determine K ROs corresponding to the X SSBs based on the mapping relationship between the SSBs and the ROs, and if K is equal to M, determine the K ROs as the M ROs.

In an implementation, the processing unit is configured to :
if K is less than M, continue to select an RO corresponding to an SSB with a highest SS-RSRP among other SSBs than the X SSBs until the M ROs are determined; or,
if K is less than M, select consecutive M-K ROs after the K ROs to obtain the M ROs.

In an implementation, the preamble sequences on the M ROs are the same, and the preamble sequences carry all information of the additional bits.

In an implementation, the preamble sequences on the M ROs are not completely the same, and each preamble sequence carries part of information of the additional bits.

In an implementation, the sending unit is configured to :
send L preamble sequences on the M ROs, where L is the number of segments of the additional bits, and L is less than or equal to M, and each preamble sequence in the L preamble sequences carries a segment of the additional bits, where L is preset, or configured by a network device, or agreed upon by a protocol, or determined by a terminal.

In an implementation, L is calculated based on M, or M is calculated based on L.

In an implementation, the information bits include user identity information and user data information.

In a sixth aspect, the present disclosure provides a preamble sequence receiving apparatus, including:
a processing unit, configured to determine one or more RO combinations, where the RO combination includes M ROs, where M is an integer greater than 1; and
a receiving unit, configured to perform reception processing of preamble sequences on each RO combination, where the preamble sequences carry additional bits generated based on information bits.

In an implementation, the processing unit is configured to :
determine one or more SSB combinations, where the SSB combination includes X SSBs, where X is an integer greater than or equal to 1; and
determine the RO combination based on the X SSBs and a mapping relationship between the SSBs and the ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the processing unit is configured to:
determine a first RO corresponding to the X SSBs based on the mapping relationship between the SSBs and the ROs; and
select consecutive M ROs starting from the first RO.

In an implementation, if the number of ROs mapped by each SSB is 1 and the number of SSBs mapped by each RO is N, where N is greater than or equal to 1, then X is equal to M;
the processing unit is configured to :
determine K ROs corresponding to the X SSBs based on the mapping relationship between the SSBs and the ROs, and if K is equal to M, determine the K ROs as the M ROs.

In an implementation, the processing unit is configured to :
if K is less than M, continue to select an RO corresponding to an SSB with a highest SS-RSRP among other SSBs than the X SSBs, until the M ROs are determined; or,
if K is less than M, select consecutive M-K ROs after the K ROs to obtain the M ROs.

In an implementation, the apparatus further includes:
a first sending unit, configured to send the number M of ROs to a terminal, where M is used to indicate sending the preamble sequences on M ROs.

In an implementation, the apparatus further includes:
a second sending unit, configured to send the number X of SSBs to a terminal, where X is used to indicate determining M ROs for sending the preamble sequences based on X SSBs.

In an implementation, the apparatus further includes:
a third sending unit, configured to send the number L of segments of the additional bits to a terminal, where L is an integer greater than 1, and L is used to indicate that each preamble sequence carries 1/L of the additional bits.

In an implementation, L is calculated based on M, or M is calculated based on L.

In an implementation, the processing unit is configured to :
solve for the additional bits carried by the preamble sequences after receiving the preamble sequences.

In an implementation, the information bits include user identity information and user data information.

In a seventh aspect, the present disclosure provides computer-readable storage medium, having a computer program stored therein, and the computer program is configured to enable a computer to execute the method according to any one of the first aspect or the second aspect.

The present disclosure provides preamble sequence sending and receiving methods and apparatuses and a storage medium, where in the method, a terminal determines M random access channel occasions (ROs) based on detected synchronization signal blocks (SSBs), where M is an integer greater than 1; and sends preamble sequences on the M ROs, where the preamble sequences carry additional bits generated based on informational bits, thereby improving the performance of the preamble sequence.

It should be understood, the content described in the above summary is not intended to limit key or important features of the embodiments of the present invention, nor is it intended to limit the scope of the present invention. Other features of the present invention will become easily understood from the following description.

### BRIEF DESCRIPTION OF DRAWINGS

In order to more clearly illustrate technical solutions of the present disclosure or the prior art, the following will briefly introduce the accompanying drawings that need to be used in the description of the embodiments or the prior art. Obviously, the accompanying drawings described below are some embodiments of the present disclosure, and for those of ordinary skill in the art, other accompanying drawings can be obtained based on these accompanying drawings without paying creative efforts.
FIG. 1 is a schematic principle diagram of a URAT technology.
FIG. 2 is a schematic diagram of a time domain configuration of PRACH resources.
FIG. 3 is a schematic diagram of a frequency domain configuration of PRACH resources.
FIG. 4 is a schematic diagram of a mapping relationship between SSBs and ROs.
FIG. 5 is a schematic flowchart of a preamble sequence sending method provided by an embodiment of the present disclosure.
FIG. 6 is a schematic diagram I of RO selection provided by an embodiment of the present disclosure.
FIG. 7 is a schematic diagram II of RO selection provided by an embodiment of the present disclosure.
FIG. 8 is a schematic diagram III of RO selection provided by an embodiment of the present disclosure.
FIG. 9 is a schematic diagram IV of RO selection provided by an embodiment of the present disclosure.
FIG. 10 is a schematic diagram V of RO selection provided by an embodiment of the present disclosure.
FIG. 11 is a schematic flowchart of a preamble sequence receiving method provided by an embodiment of the present disclosure.
FIG. 12 is a schematic structure diagram I of a preamble sequence sending apparatus provided by an embodiment of the present disclosure.
FIG. 13 is a schematic structure diagram I of a preamble sequence receiving apparatus provided by an embodiment of the present disclosure.
FIG. 14 is a schematic structure diagram II of a preamble sequence sending apparatus provided by an embodiment of the present disclosure.
FIG. 15 is a schematic structure diagram II of a preamble sequence receiving apparatus provided by an embodiment of the present disclosure.

### DETAILED DESCRIPTION OF EMBODIMENTS

Term "and/or" in the present disclosure describes an association relationship of associated objects, and represents that there may be three relationships. For example, A and/or B may represent three situations: presence of A only, presence of both A and B, and presence of B only. A character "/" generally represents an "or" relationship between associated objects before and after. In the embodiments of the present disclosure, the term "multiple" refers to two or more than two, and other quantifiers are similar.

The technical solutions in the embodiments of the present disclosure will be described as follows clearly and completely in conjunction with accompanying drawings in the embodiments of the present disclosure. Apparently, the described embodiments are merely a part rather than all of the embodiments of the present disclosure. Based on the embodiments in the present disclosure, all other embodiments obtained by those of ordinary skill in the art without paying creative efforts shall fall within the protection scope of the present disclosure.

The embodiments of the present disclosure provide methods and apparatuses for sending and receiving preamble sequences, which improve the performance of preamble sequences. The methods and the apparatuses are based on a same application concept, and since the methods and the apparatuses solve problems on similar principles, the embodiments of the apparatuses and the methods can be referred to for each other, and the repetitions will not be detailed again.

The technical solutions provided by the embodiments of the present disclosure can be applied to a variety of systems, in particular 5G systems. For example, an applicable system can be: a global system of mobile communication (global system of mobile communication, GSM) system, a code division multiple access (code division multiple access, CDMA) system, a wideband code division multiple access (Wideband Code Division Multiple Access, WCDMA), a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These various systems all include terminal devices and network devices. The system may also include a core network component, such as an evolved packet system (evolved packet system, EPS), a 5G system (5GS), etc.

The terminal device involved in the embodiments of the present disclosure may be a device that provides voice and/or data connectivity to a user, a handheld device with a wireless connection function, or other processing devices connected to a wireless modem. The name of the terminal device may also vary in different systems. For example, in a 5G system, the terminal device may be called user equipment (User Equipment, UE). A wireless terminal may communicate with one or more core networks (Core Network, CN) via a radio access network (Radio Access Network, RAN). The wireless terminal device may be a mobile terminal device, such as a mobile phone (or called "cellular" phone) and a computer with a mobile terminal device, for example, a portable, pocket-sized, handheld, computer built-in, or vehicle-mounted mobile apparatus, that exchanges language and/or data with the radio access network. For example, a personal communication service (Personal Communication Service, PCS) phone, a cordless phone, a session initiated protocol (Session Initiated Protocol, SIP) phone, a wireless local loop (wireless local loop, WLL) station, a personal digital assistant (Personal Digital Assistant, PDA) or other devices. The wireless terminal device can also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), and a user device (user device), which are not limited in the embodiments of the present disclosure.

The network device involved in the embodiments of the present disclosure may be a base station, which may include a plurality of cells providing services to the terminal. Depending on specific application scenarios, the base station can also be called an access point, or a device in the access network that communicates with the wireless terminal through one or more sectors on an air interface, or other names. The network device may be used to interchange a received air frame with an internet protocol (Internet Protocol, IP) packet, and may act as a router between the wireless terminal device and the rest of the access network, where the rest of the access network may include an Internet protocol (IP) communication network. The network device may also coordinate the management of attributes of the air interface. For example, the network device involved in the embodiments of the present disclosure may be a network device (Base Transceiver Station, BTS) in a global system for mobile communications (Global System for Mobile communications, GSM) system or code division multiple access (Code Division Multiple Access, CDMA), or a network device (NodeB) in wide-band code division multiple access (Wide-band Code Division Multiple Access, WCDMA), or an evolutional network device (evolutional Node B, eNB or e-NodeB) in a long term evolution (long term evolution, LTE) system, or a 5G base station (gNB) in a 5G network architecture (next generation system), or a home evolved base station (Home evolved Node B, HeNB), or a relay node (relay node), a home base station (femto), a pico base station (pico), etc., which are not limited in the embodiments of the present disclosure. In some network structures, the network device may include a centralized unit (centralized unit, CU) node and a distributed unit (distributed unit, DU) node, and the centralized unit and the distributed unit may also be geographically separated.

The base station and the terminal device can respectively use one or more antennas for multi input multi output (Multi Input Multi Output, MIMO) transmission, and the MIMO transmission can be single user MIMO (Single User MIMO, SU-MIMO) or multiple user MIMO (Multiple User MIMO, MU-MIMO). According to a shape and a number of antenna combinations, the MIMO transmission can be 2D-MIMO, 3D-MIMO, FD-MIMO or massive-MIMO, or can be diversity transmission, pre-coded transmission or beam forming transmission, etc.

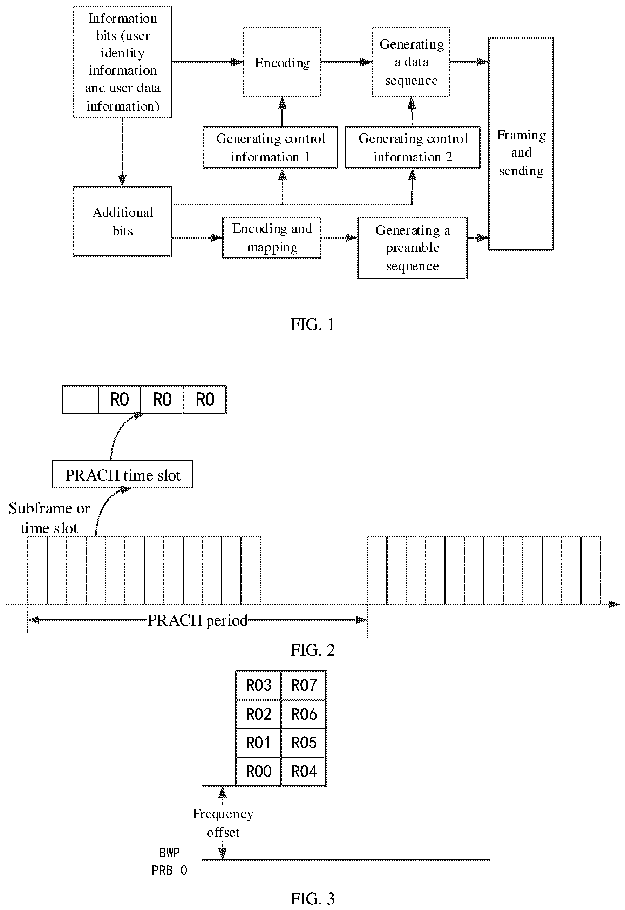

A main characteristic of the URAT technology is that it can perform both a random access process and a multiple access transmission process at the same time without requiring network coordination, in which, without requiring the network coordination means that it does not require a network to confirm an access identity of a terminal and does not require the network to schedule a transmission resource. A schematic principle diagram of a URAT technology is shown in FIG. 1. In FIG. 1, additional bits are generated based on information bits, for example, the additional bits are last A bits of the information bits, or for another example, the additional bits are cyclic redundancy check bits of the information bits. A terminal sends a preamble sequence and a data sequence according to a period until a maximum number of sending times of the data sequence is reached, or the terminal receives acknowledgement information fed back from a base station indicating that a network has correctly received the information bits, or receives information sent by the network through broadcasting to stop access transmission. The URAT technology is a fusion and upgrade of a random access technology and a multiple access transmission technology, which no longer takes random access and data transmission as two separate processes, but fuses the initial access and the data transmission into one process to support the access and transmission of a massive number of terminals, reduce the delay, and improve the success rate of access and transmission. Since the preamble sequence needs to carry information related to information bits, how to improve the performance of the preamble sequence is an urgent problem in the URAT technology.

The following will first introduce a resource that carries a preamble sequence. As shown in FIG. 2, within each physical random access channel (Physical Random Access Channel, PRACH) time slot, a network can configure one or more random access channel occasions (RACH Occasion, ROs), and an RO for sending a PRACH is called a PRACH occasion (PRACH Occasion). The PRACH Occasion is a time-frequency resource that carries preamble sequence transmission. The RO described in following embodiments of the present application refers to an RO for sending a PRACH, that is, a PRACH occasion.

As shown in FIG. 3, in a frequency domain, an NR supports configuration of 1, 2, 4, or 8 frequency-division multiplexed (Frequency-division multiplexing, FDM) PRACH resources to expand the PRACH capacity. When more than one PRACH resource is configured in the frequency domain, these PRACH resources are consecutively distributed in the frequency domain. A scenario with PRACH_FDM=4 is shown in FIG. 3, where PRACH_FDM is the number of the PRACH resources that are frequency-division multiplexed, and PRACH_FDM=4 means that a PRACH resource, frequency-division multiplexes 4 ROs in the frequency domain. In an implementation, a network side can also notify an offset of a starting physical resource block (Physical Resource Block, PRB) of a first PRACH occasion resource in the frequency domain relative to a starting PRB of a sub-bandwidth (Bandwidth Part, BWP).

Before a UE initiates random access, the UE measures and evaluates the signal quality of a cell and the signal strength of each synchronization signal block (Synchronization Signal Block, SSB) in the cell. When initiating a PRACH, the UE selects a PRACH occasion corresponding to an SSB with a strongest or stronger signal to send a preamble sequence. If successfully receiving the preamble sequence, the network obtains downlink beam information for sending downlink information to the UE based on the PRACH occasion where the preamble sequence is located, and then uses the beam information for subsequent communication, such as sending msg2, msg4, etc.

There are multiple possible scaling relationships between SSBs and PRACH occasions: 1) one-to-one mapping; 2) many-to-one mapping; and 3) one-to-many mapping. There are multiple SSBs actually transmitted and multiple PRACH occasions configured in a system, and both the network side and the UE need to know which PRACH occasion(s) each SSB corresponds to.

In NR, a mapping of SSBs to ROs for PRACH transmission, i.e., PRACH occasions, is designed with frequency domain prioritization, and multiple SSBs can be mapped to PRACH occasions in following orders:
(1) within each PRACH occasion, in an increasing order of indexes of preamble sequences;
(2) in an increasing order of numbers of FDMed PRACH occasions;
(3) within a PRACH time slot, in an increasing order of numbers of time division multiplexed PRACH occasions;
(4) in an increasing order of PRACH time slots.

For a scenario where a base station can only receive a single beam, multiple frequency-division multiplexed PRACH occasions can be configured to correspond to a same SSB.

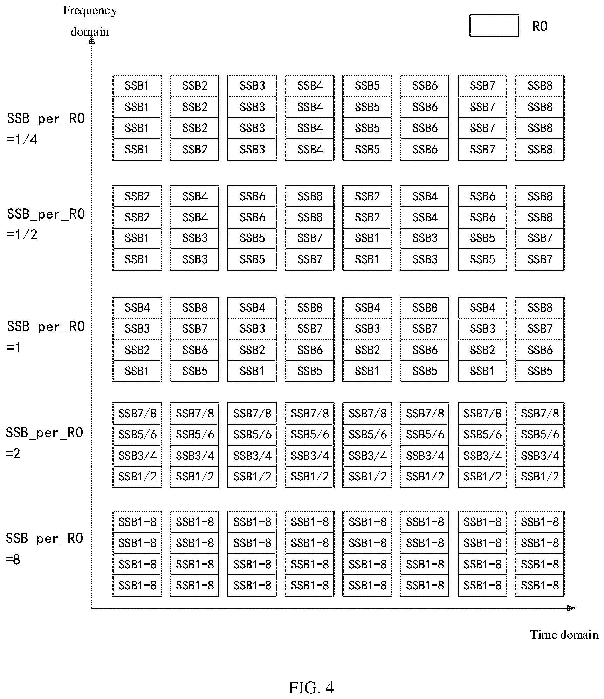

Take 8 SSBs and PRACH_FDM=4 as an example for illustration, where PRACH_FDM=4 means that, the PRACH resource frequency-division multiplexes 4 ROs in the frequency domain as shown in FIG. 3. FIG. 4 shows a mapping relationship between SSBs and ROs for different SSB_per_RO (1/4, 1/2, 1, 2, 8), which is represented by SSB_per_RO=N, where when N is less than 1, SSB_per_RO=N represents that the number of ROs mapped by each SSB is 1/N. For example, SSB_per_RO=1/4 represents that the number of ROs mapped by each SSB is 4, since PRACH_FDM=4, one SSB can be mapped to one time domain RO (the time domain RO consists of 4 ROs in the frequency domain, i.e., one SSB is mapped to one time domain RO consisting of 4 ROs in the frequency domain). When N is greater than or equal to 1, SSB_per_RO=N represents that the number of SSBs mapped to each RO is N and the number of ROs mapped to each SSB is 1. For example, SSB_per_RO=2 represents that the number of SSBs mapped to each RO is 2, and one SSB is mapped to one RO, since PRACH_FDM=4, 8 SSBs can be mapped to one time domain RO (consisting of 4 ROs in the frequency domain).

In NR, the number of SSBs mapped by each RO or the number of ROs mapped by each SSB can be determined based on ssb-perRACH-Occasion (ssb-perRACH-OccasionAndCB-PreamblePerSSB), (which may also be obtained from other parameters, such as msgA-SSB-perRACH-OccasionAndCB-PreamblePerSSB, a related parameter in CFRA, etc.) . For example, ssb-perRACH-Occasion can be configured as {1/8, 1/4, 1/2, 1, 2, 4, 8, 16}. When N is less than 1, each SSB can be associated with 1/N ROs. When N is greater than or equal to 1, each SSB is associated with one RO.

In related technologies, when an SSB selected by a UE is mapped to multiple ROs, the UE randomly selects one RO to send a preamble sequence. In the present disclosure, since a preamble sequence in URAT technology needs to carry information related to information bits, in order to improve the performance of the preamble sequence, multiple ROs corresponding to one or more SSBs can be selected for sending preamble sequences.

In view of the above, an embodiment of the present disclosure provides a preamble sequence transmission method, in which a UE determines multiple ROs based on detected SSBs and sends preamble sequences on the multiple ROs, where the preamble sequences carry additional bits generated based on information bits, thereby improving the performance of preamble sequences in URAT technology.

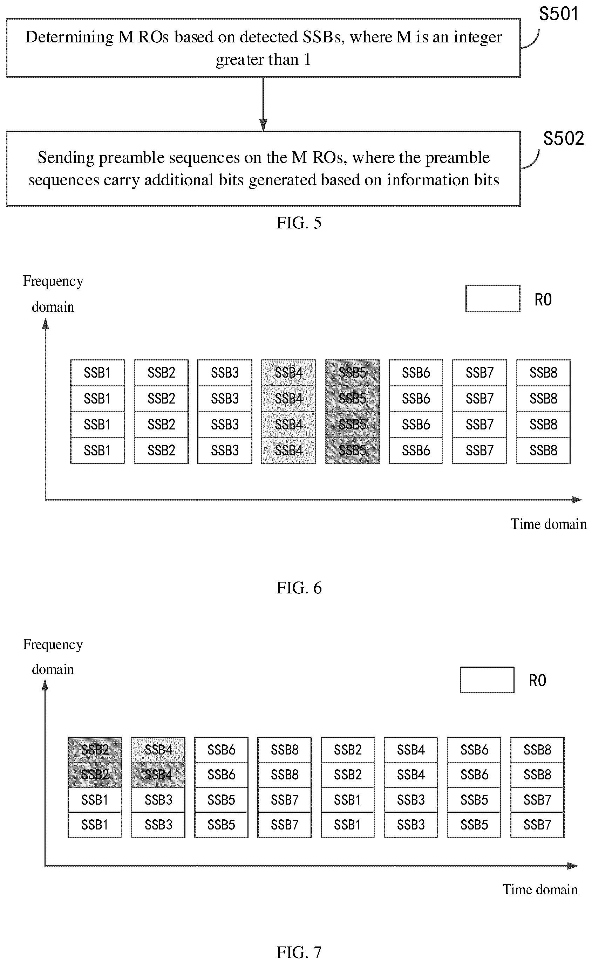

FIG. 5 is a flowchart of a preamble sequence sending method provided by an embodiment of the present disclosure. As shown in FIG. 5, the method includes:
S501, determining M ROs based on detected SSBs, where M is an integer greater than 1.

In URAT, when sending a preamble sequence, a UE can detect SSB bursts (bursts), and select a suitable SSB from all detected SSBs based on a detected synchronization signal reference signal received power (Synchronization Signal Reference Signal Received Power, SS-RSRP) of each SSB, for example, one or more SSBs with a highest SS-RSRP are selected, or for another example, one or more SSBs with an SS-RSRP greater than a preset threshold are selected, and multiple ROs used for the preamble sequences are determined based on the selected SSB. That is, the UE selects X SSBs from the detected SSBs at least based on the SS-RSRPs of the detected SSBs, where X is an integer greater than or equal to 1, and X can be preset, or configured by a network device, or agreed upon by a protocol, or determined by the UE itself. M ROs are determined based on the X SSBs and a mapping relationship between SSBs and ROs, where M can be preset, or configured by a network device, or agreed upon by a protocol, or determined by a terminal. In addition to the SS-RSRP, the UE may also select the X SSBs based on other information, which is not limited by the present embodiment.

S502, sending preamble sequences on the M ROs, where the preamble sequences carry additional bits generated based on information bits.

As previously described, in URAT, the preamble sequences carry information of the information bits, referring to FIG. 1, that is, the preamble sequences carry additional bits generated based on the information bits, where the information bits include user identity information and user data information. The UE sends the preamble sequences on the M ROs. Optionally, the preamble sequences on the M ROs may be the same, i.e., the preamble sequence carries all information of the additional bits, and the preamble sequence is sent repeatedly via the M ROs, thereby improving the performance of preamble sequences in URAT technology. Optionally, the preamble sequences on the M ROs may not be completely the same, each preamble sequence carries part of the information of the additional bits. For example, M is 4, and among the 4 ROs, preamble sequences on 2 ROs of the 4 ROs are the same, which are called as a first preamble sequence, and preamble sequences on the other 2 ROs are the same, which are called a second preamble sequence. The first preamble sequence and the second preamble sequence are different, with each of the first preamble sequence and second preamble sequence respectively carrying part of the information of the additional bits, and the first preamble sequence and second preamble sequence together carry all of the information of the additional bits. When the preamble sequence carries part of the information of the additional bits, the number of elements required in a preamble sequence candidate set (2^b, b being the number of bits of the part of the additional bits carried by the preamble sequence) is correspondingly smaller, and thus, the detection complexity of the preamble sequence can be reduced, and meanwhile detection in a smaller candidate set can improve the performance of preamble sequence detection.

On the basis of the above embodiment, how to select SSBs and ROs is illustrated with examples. In the following examples, 8 SSBs and PRACH_FDM=4 are taken as an example.

In an implementation, if the number of ROs mapped by each SSB is 1/N, where N is less than 1, then M ROs represent X/N ROs corresponding to X SSBs.

Referring to FIG. 6, SSB_per_RO=1/4, that is, the number of ROs mapped by each SSB as configured by a network device is 4. A UE first selects X SSBs from detected SSBs based on SS-RSRPs of the detected SSBs. For example, the X SSBs represent X SSBs with highest SS-RSRPs among all SSBs, or the X SSBs represent X SSBs whose SS-RSRPs exceed a preset threshold. For example, X is 1, SSB4corresponds to the highest SS-RSRP among the 8 SSBs, and the UE selects SSB4 as the X (X is 1) SSB and selects 4 ROs mapped by SSB4 as the determined M (M is 4) ROs. For example, X is 2, SSB4 and SSB5 correspond to two highest SS-RSRPs among the 8 SSBs, and the UE selects SSB4 and SSB5 as the X (X is 2) SSBs and selects 8 ROs mapped by SSB4 and SSB5 as the determined M (M is 8) ROs.

Taking X being 2 as an example, after selecting 8 ROs mapped by SSB4 and SSB5, the UE can send preamble sequences on the 8 ROs, which may be the same or not completely the same.

Optionally, in a scenario where preamble sequences on the 8 ROs are not completely the same, the UE determines, based on M, the number of segments L for segmenting additional bits, and sends L preamble sequences on the M ROs, where each of the L preamble sequences carries one segment of the additional bits. Optionally, L is less than or equal to M. For example, the value of L may be equal to M. For another example, L can be obtained through calculation based on M, for example, L is M divided by P and rounded up to a nearest integer, where P can be preset, or configured by a network device, or agreed upon by a protocol, or determined by a terminal, for example, P=2. The numbers of preamble sequence transmissions corresponding to different segments of additional bits can be equal or not equal.

In an implementation, if the number of ROs mapped by each SSB is 1/N, where N is less than 1, then X is equivalent to M divided by 1/N and rounded up to a nearest integer, and M ROs represent M ROs in X/N ROs corresponding to the X SSBs.

In the implementation, the UE selects X SSBs from the detected SSBs based on the value of M, and the value of M can be agreed upon by a protocol, or configured by a network device, or agreed upon by a protocol, or determined by a terminal, where the terminal can determine by itself or determine based on a relevant parameter configured by a network device. Referring to FIG. 7, SSB_per_RO=1/2, that is, the number of ROs mapped by each SSB configured by the network device is 2.

Assuming that M is 4, the number X of SSBs needed to be selected by the UE is 2. The X SSBs represent X SSBs with highest SS-RSRPs among all SSBs or the X SSBs represent X SSBs whose SS-RSRPs exceed a preset threshold. For example, SSB2 and SSB4 correspond to two highest SS-RSRPs among the 8 SSBs, and then the UE selects SSB2 and SSB4 as the X (X is 2) SSBs, and selects 4 ROs mapped by SSB2 and SSB4 as the determined M (M is 4) ROs.

Assuming that M is 3, the number X of SSBs needed to be selected by the UE is 2. The X SSBs represent X SSBs with highest SS-RSRPs among all SSBs or the X SSBs represent X SSBs whose SS-RSRPs exceed a preset threshold. For example, SSB2 and SSB4 correspond to two highest SS-RSRPs among the 8 SSBs, and then the UE selects SSB2 and SSB4 as the X (X is 2) SSBs, and selects 3 ROs from the 4 ROs mapped by SSB2 and SSB4 as the determined M (M is 3) ROs.

Taking M being 4 as an example, after selecting 4 ROs mapped by SSB2 and SSB4, the UE can send preamble sequences on the 4 ROs, which may be the same or not completely the same.

Optionally, in a scenario, preamble sequences on the 4 ROs are not completely the same. In an implementation, the UE determines, based on the value of M, the number L of segments for segmenting additional bits, and sends L preamble sequences on the M ROs, where each of the L preamble sequences carries one segment of the additional bits. Optionally, L is less than or equal to M. In the implementation, the UE determines the number L of segments based on M after determining M ROs.

In another implementation, the UE can first determine the number L of segments for segmenting the additional bits, and then determine M based on the number L of segments. Optionally, M is less than or equal to L. Optionally, the number L of segments can be agreed upon by a protocol, or indicated by a network device, or determined by the UE based on a relevant parameter configured by a network device, or determined by the UE itself, for example, the UE determines L based on the number of additional bits. Optionally, the value of M can be equal to L. Optionally, the value of M can be obtained through calculation based on L, for example, M is L multiplied by P, where P can be preset, or configured by a network device, or agreed upon by a protocol, or determined by a terminal, for example, P=2. That is, the UE first determines L, then determines M based on the number L of segments, and then determines M ROs based on the method of the implementation, and sends L preamble sequences on the M ROs.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold. The UE determines M ROs based on the X SSBs and a mapping relationship between SSBs and ROs, including: determining a first RO corresponding to the X SSBs based on the mapping relationship between the SSBs and the ROs; selecting consecutive M ROs starting from the first RO.

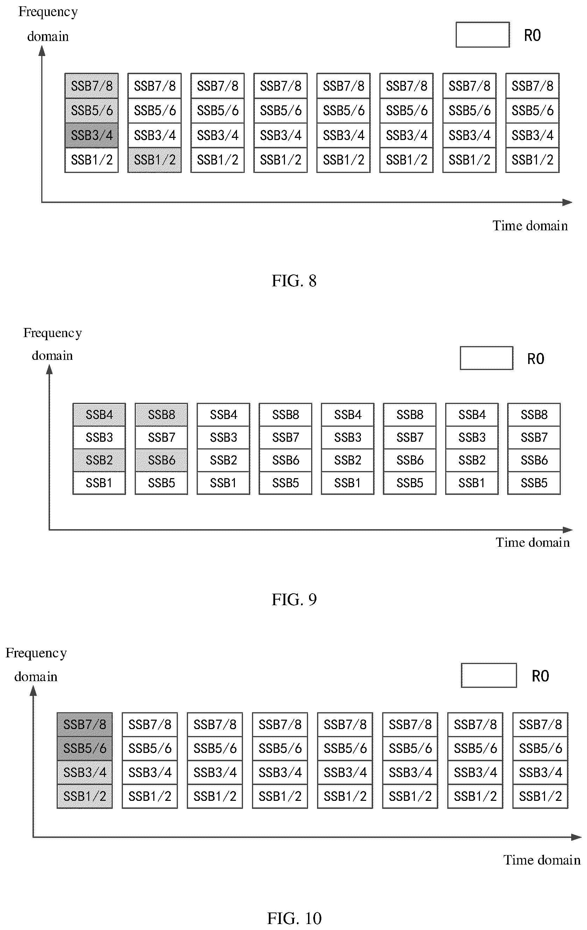

In the implementation, the value of M can be agreed upon by a protocol, or configured by a network device, or agreed upon by a protocol, or determined by a terminal, where the terminal can determine by itself or determine based on a relevant parameter configured by a network device. Referring to FIG. 8, SSB_per_RO=2, that is, the number of SSBs associated with each RO configured by a network device is 2, and the number of ROs mapped by each SSB is 1. Assuming M is 4 and SSB4 corresponds to a highest SS-RSRP among 8 SSBs, the terminal selects SSB4 as the selected X (X is 1) SSB, and takes an RO corresponding to SSB4 as a first RO, thereby selecting 4 consecutive ROs starting from the RO corresponding to SSB4 as the determined M (M is 4) ROs. After selecting the 4 ROs, UE can send preamble sequences on the 4 ROs, and the preamble sequences on the 4 ROs may be the same or not completely the same. In a scenario where the preamble sequences are not completely the same, the implementation of segmenting additional bits by a UE is similar to the description above and will not be repeated here.

In an implementation, if the number of ROs mapped by each SSB is 1 and the number of SSBs mapped by each RO is N, where N is greater than or equal to 1, then X is equal to M, the X SSBs represent M SSBs corresponding to M highest SS-RSRPs among all SSBs, or the X SSBs represent M SSBs whose SS-RSRPs exceed a preset threshold; the UE determines M ROs based on the X SSBs and the mapping relationship between the SSBs and the ROs, including: determining K ROs corresponding to the X SSBs based on the mapping relationship between the SSBs and the ROs, and if K is equal to M, determining the K ROs as the M ROs; if K is less than M, continuing to select an RO corresponding to an SSB with a highest SS-RSRP among other SSBs than the X SSBs until M ROs are determined; or, selecting consecutive M-K ROs after the K ROs to obtain M ROs.

In this implementation, the value of M can be agreed upon by a protocol, or configured by a network device, or agreed upon by a protocol, or determined by a terminal, where the terminal can determine by itself or determine based on a relevant parameter configured by a network device. Referring to FIG. 9, SSB_per_RO=1, that is, the number N of SSBs associated with each RO configured by a network device is 1, and the number of ROs mapped by each SSB is 1. Assuming M is 4 and SSB2, SSB4, SSB6, SSB8 correspond to 4 highest SS-RSRPs among the 8 SSBs, the terminal selects SSB2, SSB4, SSB6, SSB8 as the selected X (X is 4) SSBs, and the number K of ROs corresponding to SSB2, SSB4, SSB6, SSB8 is 4, that is, K is equal to M. Therefore, the 4 ROs corresponding to SSB2, SSB4, SSB6, and SSB8 are taken as the determined M (M is 4) ROs. After selecting the 4 ROs, UE can send preamble sequences on the 4 ROs, and the preamble sequences on the 4 ROs may be the same or not completely the same.

Referring to FIG. 10, SSB_per_RO=2, that is, the number N of SSBs associated with each RO configured by a network device is 2, and the number of ROs mapped by each SSB is 1. Assuming M is 4 and SSB1, SSB2, SSB3, SSB4 correspond to 4 highest SS-RSRPs among 8 SSBs, a terminal selects SSB1, SSB2, SSB3, SSB4 as the selected X (X is 4) SSBs, and the number K of ROs corresponding to SSB1, SSB2, SSB3, SSB4 is 2, that is, K is less than M. Therefore, in addition to the 2 ROs corresponding to SSB1, SSB2, SSB3, and SSB4, the UE continues to select an RO corresponding to an SSB with a highest SS-RSRP among other SSBs than the 2 SSBs until M ROs are determined. For example, assuming that except the 2 ROs corresponding to SSB1, SSB2, SSB3, and SSB4, SSB5 and SSB7 correspond to highest SS-RSRPs, the UE continues to select 2 ROs corresponding to SSB5 and SSB7, thereby selecting a total of 4 ROs. Or, 2 consecutive ROs after the 2 ROs corresponding to SSB1, SSB2, SSB3, and SSB4 are selected, thereby obtaining 4 ROs.

After selecting the 4 ROs, the UE can send preamble sequences on the 4 ROs, and the preamble sequences on the 4 ROs may be the same or not completely the same. In a scenario where the preamble sequences are not completely the same, the implementation of segmenting additional bits by the UE is similar to the description above and will not be repeated here.

In the embodiment of the present disclosure, multiple ROs for preamble sequence transmission are determined based on a mapping relationship between SSBs and ROs, which can improve the performance of the preamble sequence transmission compared to using one RO for preamble sequence transmission. In addition, additional bits are segmented and different segments of the additional bits are transmitted using different preamble sequences, which can reduce information carried by a single preamble sequence, and then reduce the number of sequences in a preamble sequence candidate set, and thus, the detection complexity can be reduced, and meanwhile, detection in a smaller candidate set can improve the performance of preamble sequence detection.

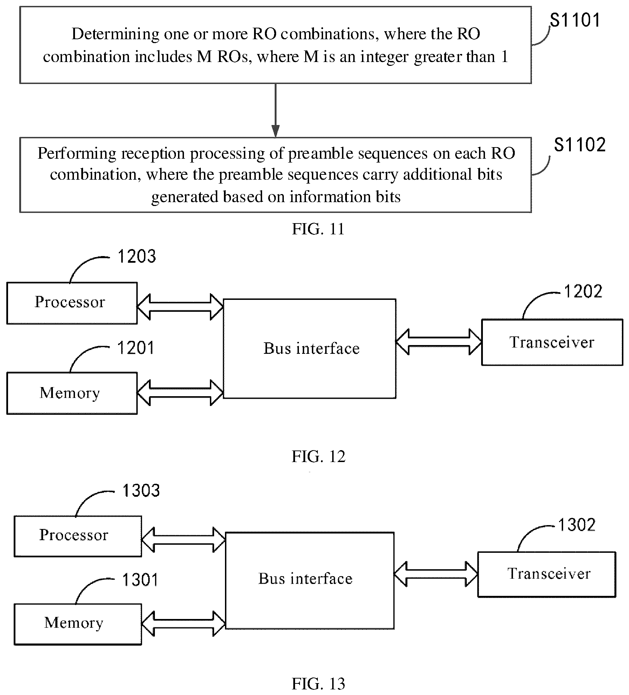

FIG. 11 is a schematic flowchart of a preamble sequence receiving method provided by an embodiment of the present disclosure. As shown in FIG. 11, the method includes:
S1101, determining one or more RO combinations, where the RO combination includes M ROs, where M is an integer greater than 1.

For a network device, due to the lack of SS-RSRP information used by a terminal, the network device can only perform blind detection on ROs when receiving preamble sequences. In an embodiment of the present disclosure, a terminal sends preamble sequences through multiple ROs, so the network device first determines an RO combination consisting of M ROs so as to perform detection. M may be the number of ROs configured by the network device for the terminal to send preamble sequences, or agreed upon by a protocol, or determined by the network device from candidate values.

S1102, performing reception processing of preamble sequences on each RO combination, where the preamble sequences carry additional bits generated based on information bits.

For all determined RO combinations consisting of M ROs, the network device is required to perform reception processing to obtain the preamble sequences sent by the terminal through the M ROs. Optionally, after receiving the preamble sequences, additional bits carried by the preamble sequences are solved for.

In an implementation, determining one or more RO combinations includes:
determining one or more SSB combinations, where the SSB combination includes X SSBs, where X is an integer greater than or equal to 1; and
determining the RO combination based on the X SSBs and a mapping relationship between SSBs and ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the determining the RO combination based on the X SSBs and the mapping relationship between the SSBs and the ROs includes:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs mapped by each RO is N, where N is greater than or equal to 1, then X is equal to M;
the determining the RO combination based on the X SSBs and the mapping relationship between the SSBs and the ROs includes:
determining K ROs corresponding to the X SSBs based on the mapping relationship between the SSBs and the ROs, and if K is equal to M, determining the K ROs as the M ROs.

In an embodiment, the method further includes:
if K is less than M, continuing to select an RO corresponding to other SSB than the X SSBs, until the M ROs are determined; or if K is less than M, selecting consecutive M-K ROs after the K ROs to obtain the M ROs.

In the embodiment, a network device first determines an SSB combination consisting of X SSBs, then determines an RO combination based on each SSB combination, where the method of determining M ROs based on X SSBs is similar to that of a terminal side, with the difference that the network device side does not select an SSB based on SS-RSRPs of SSBs. That is, instead of determining one unique SSB combination based on the SS-RSRPs of the SSBs, the network device side determines one or more possible SSB combinations, and for each SSB combination, determines one or more RO combinations. In addition, when determining the M ROs based on the X SSBs, instead of selecting ROs corresponding to SSBs based on SS-RSRPs of the SSBs, one or more possible types of M ROs are selected.

In an implementation, the network device sends the number M of ROs to a terminal, where M is used to indicate sending the preamble sequences on M ROs

In an implementation, the network device sends the number X of SSBs to a terminal, where X is used to indicate determining M ROs for sending the preamble sequences based on X SSBs.

In an implementation, the network device sends the number L of segments of the additional bits to a terminal, where L is an integer greater than 1, and L is used to indicate that each preamble sequence carries 1/L of the additional bits.

In an implementation, L is calculated based on M, or M is calculated based on L.

The functions of the above information sent by the network device to the terminal have been described in detail in the forgoing embodiment, and will not be repeated here.

The network device receives preamble sequences sent by the terminal through M ROs, which improves the performance of the preamble sequences.

FIG. 12 is a schematic structure diagram I of a preamble sequence sending apparatus provided by an embodiment of the present disclosure. As shown in FIG. 12, the sending a preamble sequence includes: a memory 1201, a transceiver 1202 and a processor 1203;
the memory 1201 is configured to store a computer program;
the transceiver 1202 is configured to send and receive data under control of the processor;
the processor 1203 is configured to read the computer program stored in the memory and execute the following operations:
   determining M random access channel occasions (ROs) based on detected synchronization signal blocks (SSBs), where M is an integer greater than 1; and
   sending preamble sequences on the M ROs, where the preamble sequences carry additional bits generated based on information bits.

In an implementation, the processor 1203 is configured to execute the following operations:
selecting X SSBs from the detected SSBs at least based on synchronization signal-reference signal received powers (SS-RSRPs) of the detected SSBs, where X is an integer greater than or equal to 1, and X is preset, or configured by a network device, or agreed upon by a protocol, or determined by a terminal; and
determining the M ROs based on the X SSBs and a mapping relationship between SSBs and ROs, where M is preset, or configured by a network device, or agreed upon by a protocol, or determined by a terminal.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, the X SSBs represent X SSBs with highest SS-RSRPs among all SSBs, or the X SSBs represent X SSBs whose SS-RSRPs exceed a preset threshold.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold;
the processor 1203 is configured to execute the following operations:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs mapped by each RO is N, where N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
the processor 1203 is configured to execute the following operation:
determining K ROs corresponding to the X SSBs based on the mapping relationship between the SSBs and the ROs, and if K is equal to M, determining the K ROs as the M ROs.

In an implementation, the processor 1203 is configured to execute the following operation:
if K is less than M, continuing to select an RO corresponding to other SSB than the X SSBs until the M ROs are determined; or if K is less than M, selecting consecutive M-K ROs after the K ROs to obtain the M ROs.

In an implementation, the preamble sequences on the M ROs are the same, and the preamble sequences carry all information of the additional bits.

In an implementation, the preamble sequences on the M ROs are not completely the same, and each preamble sequence carries part of information of the additional bits.

In an implementation, the processor 1203 is configured to execute the following operation:
sending L preamble sequences on the M ROs, where L is the number of segments of the additional bits, and L is less than or equal to M, each preamble sequence in the L preamble sequences carries a segment of the additional bits, where L is preset, or configured by a network device, or agreed upon by a protocol, or determined by a terminal.

In an implementation, L is calculated based on M, or M is calculated based on L.

In an implementation, the information bits include user identity information and user data information.

In FIG. 12, a bus architecture may include any number of interconnected buses and bridges, specifically, various circuits of one or more processors, represented by the processor 1203, and a memory, represented by a memory 1201 are linked together. The bus architecture may also link together other various circuits such as peripherals, voltage regulators, and power management circuits, all of which are well known in the art, and thus will not be further described. A bus interface provides an interface. The transceiver 1202 may be a plurality of elements, i.e., including a transmitter and a receiver, providing units for communicating with a variety of other devices over transmission media, which include which include wireless channels, wired channels, fiber optic cables, and other transmission media. For different user equipment, a user interface may also be an interface capable of externally internally connecting desired devices, including but not limited to a keypad, a monitor, a speaker, a microphone, a joystick, and so on.

The processor 1203 is responsible for managing the bus architecture and usual processing, and the memory 1201 can store data used by the processor 1203 in performing operations.

Optionally, the processor 1203 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

The processor 1203 is configured to execute any one of the methods provided by embodiments of the present disclosure in accordance with obtained executable instructions by calling the computer program stored in the memory 1201. The processor 1203 and the memory 1201 may also be arranged physically separated.

It should be noted herein that the apparatus provided in the present disclosure can implement all the method steps implemented in the above method embodiment, and can achieve the same technical effects. The same parts and beneficial effects of this embodiment as those of the method embodiment will not be specifically elaborated here.

FIG. 13 is a schematic structure diagram I of a preamble sequence receiving apparatus provided by an embodiment of the present disclosure. As shown in FIG. 13, the preamble sequence receiving apparatus includes: a memory 1301, a transceiver 1302 and a processor 1303;
the memory 1301 is configured to store a computer program;
the transceiver 1302 is configured to send and receive data under control of the processor;
the processor 1303 is configured to read the computer program stored in the memory and execute the following operations:
   determining one or more RO combinations, where the RO combination includes M ROs, where M is an integer greater than 1; and
   performing reception processing of preamble sequences on each RO combination, where the preamble sequences carry additional bits generated based on information bits.

In an implementation, the processor 1303 is configured to execute the following operations:
determining one or more SSB combinations, where the SSB combination includes X SSBs, where X is an integer greater than or equal to 1; and
determining the RO combination based on the X SSBs and a mapping relationship between SSBs and ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the processor 1303 is configured to execute the following operations:
determining a first RO corresponding to the X SSBs based on the mapping relationship between the SSBs and the ROs; and
selecting consecutive M ROs starting from the first RO.

In an implementation, if the number of ROs mapped by each SSB is 1 and the number of SSBs mapped by each RO is N, where N is greater than or equal to 1, then X is equal to M;
the processor 1303 is configured to execute the following operation:
determining K ROs corresponding to the X SSBs based on the mapping relationship between the SSBs and the ROs, and if K is equal to M, then determining the K ROs as the M ROs.

In an implementation, the processor 1303 is configured to execute the following operation:
if K is less than M, continuing to select an RO corresponding to other SSB than the X SSBs, until the M ROs are determined; or if K is less than M, selecting consecutive M-K ROs after the K ROs to obtain the M ROs.

In an implementation, the processor 1303 is configured to execute the following operation:
sending the number M of ROs to a terminal, where M is used to indicate sending the preamble sequences on M ROs.

In an implementation, the processor 1303 is configured to execute the following operation:
sending the number X of SSBs to a terminal, where X is used to indicate determining M ROs for sending the preamble sequences based on X SSBs.

In an implementation, the processor 1303 is configured to execute the following operation:
sending the number L of segments of the additional bits to a terminal, where L is an integer greater than 1, and L is used to indicate that each preamble sequence carries 1/L of the additional bits.

In an implementation, L is calculated based on M, or M is calculated based on L.

In an implementation, the processor 1303 is configured to execute the following operation:
solving for the additional bits carried by the preamble sequences after receiving the preamble sequences.

In an implementation, the information bits include user identity information and user data information.

In FIG. 13, a bus architecture may include any number of interconnected buses and bridges, specifically, various circuits of one or more processors, represented by the processor 1303, and a memory, represented by a memory 1301 are linked together. The bus architecture may also link together other various circuits such as peripherals, voltage regulators, and power management circuits, all of which are well known in the art, and thus will not be further described herein. A bus interface provides an interface. The transceiver 1302 may be a plurality of elements, i.e., including a transmitter and a receiver, providing units for communicating with a variety of other devices over transmission media, which include which include wireless channels, wired channels, fiber optic cables, and other transmission media. For different user equipment, a user interface may also be an interface capable of externally internally connecting desired devices, including but not limited to a keypad, a monitor, a speaker, a microphone, a joystick, and so on.

The processor 1303 is responsible for managing the bus architecture and usual processing, and the memory 1301 can store data used by the processor 1303 in performing operations.

Optionally, the processor 1303 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

The processor 1303 is configured to execute any one of the methods provided by embodiment of the present disclosure in accordance with obtained executable instructions by calling the computer program stored in the memory 1301. The processor 1303 and the memory 1301 may also be arranged physically separated.

It should be noted herein that the apparatus provided in the present disclosure can implement all the method steps implemented in the above method embodiment, and can achieve the same technical effects. The same parts and beneficial effects of this embodiment as those of the method embodiment will not be specifically elaborated here.

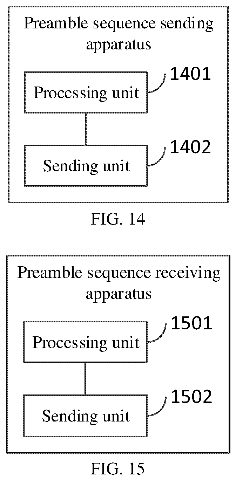

FIG. 14 is a schematic structure diagram II of a preamble sequence sending apparatus provided by an embodiment of the present disclosure. As shown in FIG. 14, the preamble sequence sending apparatus includes:
a processing unit 1401, configured to determine M random access channel occasions (ROs) based on detected synchronization signal blocks (SSBs), where M is an integer greater than 1; and
a sending unit 1402, configured to send preamble sequences on the M ROs, where the preamble sequences carry additional bits generated based on information bits.

In an implementation, the processing unit 1401 is configured to:
select X SSBs from the detected SSBs at least based on synchronization signal-reference signal received powers (SS-RSRPs) of the detected SSBs, where X is an integer greater than or equal to 1, and X is preset, or configured by a network device, or agreed upon by a protocol, or determined by a terminal; and
determine the M ROs based on the X SSBs and a mapping relationship between SSBs and ROs, where M is preset, or configured by a network device, or agreed upon by a protocol, or determined by a terminal.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, the X SSBs represent X SSBs with highest SS-RSRPs among all SSBs, or the X SSBs represent X SSBs whose SS-RSRPs exceed a preset threshold.

In an implementation, if the number of ROs mapped by each SSB is 1 and the number of SSBs mapped by each RO is N, where N is greater than or equal to 1, then X is 1, and the X SSBs represent one SSB with a highest SS-RSRP among all SSBs, or the X SSBs represent one SSB whose SS-RSRP exceeds a preset threshold;
the processing unit 1401 is configured to:
determine a first RO corresponding to the X SSBs based on the mapping relationship between the SSBs and the ROs; and
select consecutive M ROs starting from the first RO.

In an implementation, if the number of ROs mapped by each SSB is 1 and the number of SSBs mapped by each RO is N, where N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
the processing unit 1401 is configured to:
determine K ROs corresponding to the X SSBs based on the mapping relationship between the SSBs and the ROs, and if K is equal to M, determine the K ROs as the M ROs.

In an implementation, the processing unit 1401 is configured to :
if K is less than M, continue to select an RO corresponding to an SSB with a highest SS-RSRP among other SSBs than the X SSBs until the M ROs are determined, or if K is less than M, select consecutive M-K ROs after the K ROs to obtain the M ROs.

In an implementation, the preamble sequences on the M ROs are the same, and the preamble sequences carry all information of the additional bits.

In an implementation, the preamble sequences on the M ROs are not completely the same, and each preamble sequence carries part of information of the additional bits.

In an implementation, the sending unit 1402 is configured to:
send L preamble sequences on the M ROs, where L is the number of segments of the additional bits, and L is less than or equal to M, each preamble sequence in the L preamble sequences carries a segment of the additional bits, where L is preset, or configured by a network device, or agreed upon by a protocol, or determined by a terminal.

In an implementation, L is calculated based on M, or M is calculated based on L.

In an implementation, the information bits include user identity information and user data information.

It should be noted herein that the apparatus provided in the present disclosure can implement all the method steps implemented in the above method embodiment, and can achieve the same technical effects. The same parts and beneficial effects of this embodiment as those of the method embodiments will not be specifically elaborated here.

FIG. 15 is a schematic structure diagram II of a preamble sequence receiving apparatus provided by an embodiment of the present disclosure. As shown in FIG. 15, the preamble sequence receiving apparatus includes:
a processing unit 1501, configured to determine one or more RO combinations, where the RO combination includes M ROs, where M is an integer greater than 1; and
a receiving unit 1502, configured to perform reception processing of preamble sequences on each RO combination, where the preamble sequences carry additional bits generated based on information bits.

In an implementation, the processing unit 1501 is configured to:
determine one or more SSB combinations, where the SSB combination includes X SSBs, where X is an integer greater than or equal to 1; and
determine the RO combination based on the X SSBs and a mapping relationship between SSBs and ROs.

In an implementation, if the number of ROs mapped by each SSB is 1/N, where N is less than 1, then the M ROs represent X/N ROs corresponding to the X SSBs.

In an implementation, if the number of ROs mapped by each SSB is 1/N, where N is less than 1, then X is equivalent to M divided by 1/N and rounded up to a nearest integer, and the M ROs represent M ROs in X/N ROs corresponding to the X SSBs.

In an implementation, if the number of ROs mapped by each SSB is 1 and the number of SSBs mapped by each RO is N, where N is greater than or equal to 1, then X is 1;
the processing unit 1501 is configured to:
determine a first RO corresponding to the X SSBs based on the mapping relationship between the SSBs and the ROs; and
select consecutive M ROs starting from the first RO.

In an implementation, if the number of ROs mapped by each SSB is 1 and the number of SSBs mapped by each RO is N, where N is greater than or equal to 1, then X is equal to M;
the processing unit 1501 is configured to:
determine K ROs corresponding to the X SSBs based on the mapping relationship between the SSBs and the ROs, and if K is equal to M, determine the K ROs as the M ROs.

In an implementation, the processing unit 1501 is configured to:
if K is less than M, continue to select an RO corresponding to other SSB than the X SSBs, until the M ROs are determined, or if K is less than M, select consecutive M-K ROs after the K ROs to obtain the M ROs.

In an implementation, further include:
a first sending unit, configured to send the number M of ROs to a terminal, where M is used to indicate sending the preamble sequences on M ROs.

In an implementation, further include:
a second sending unit, configured to send the number X of SSBs to a terminal, where X is used to indicate determining M ROs for sending the preamble sequences based on X SSBs.

In an implementation, further include:
a third sending unit, configured to send the number L of segments of the additional bits to a terminal, where L is an integer greater than 1, and L is used to indicate that each preamble sequence carries 1/L of the additional bits.

In an implementation, L is calculated based on M, or M is calculated based on L.

In an implementation, the processing unit 1501 is configured to:
solve for the additional bits carried by the preamble sequences after receiving the preamble sequences.

In an implementation, the information bits include user identity information and user data information.

It should be noted herein that the apparatus provided in the present disclosure can implement all the method steps implemented in the above method embodiment, and can achieve the same technical effects. The same parts and beneficial effects of this embodiment as those of the method embodiments will not be specifically elaborated here.

It should be noted that the divisions of the units in the embodiments of the present disclosure are schematic and only serve as logical functional divisions. In actual implementation, there may be other division methods. In addition, in various embodiments of the present disclosure, functional units can be integrated into a single processing unit, or the units can physically exist, separately, or two or more units can be integrated into one unit. The aforementioned integrated unit may be realized in a form of hardware or a form of a software functional unit.

If the aforementioned integrated unit is realized in the software function unit and sold or used as an independent product, it can be stored in a processor-readable storage medium. Based on this understanding, the technical solution of the present disclosure is essentially or part of the contribution to the prior art or all or part of the technical solution can be embodied in the form of a software product, and the computer software product is stored in a storage medium, including several instructions to enable a computer device (which may be a personal computer, a server, or a network device, etc.) or a processor (processor) to execute all or part of the steps of the methods in various embodiments of the present disclosure. The aforementioned storage medium includes: a U disk, a mobile hard disk, a read-only memory (Read-Only Memory, ROM), a random access memory (Random Access Memory, RAM), a magnetic disk or an optical disk and other various media that can store program codes.

An embodiment of the present disclosure also provides a computer-readable storage medium, where the computer-readable storage medium stores a computer program, and the computer program is configured to cause a computer to execute the method performed by a terminal or a network device in the method embodiments described above.

The computer-readable storage medium may be any available medium or data storage device that a computer can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

An embodiment of the present disclosure also provides a computer program product, including a computer program, and when the computer program is executed by a processor, the method executed by a terminal or a network device in the method embodiments described above is implemented.

Those skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) containing computer-usable program codes.

The present disclosure is described with reference to the flowcharts and/or block diagrams of the methods, the devices (systems) and the computer program products according to the embodiments of the present disclosure. It should be understood that, each flowchart and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, so that the instructions are executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed on the computer or other programmable devices to generate computer-implemented processing. Thus, the instructions executed on the computer or other programmable devices provide steps for implementing the functions specified in one or more processes in the flowcharts and/or one or more blocks in the block diagrams.

Obviously, those skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A preamble sequence sending method, **characterized by** comprising:
determining M random access channel occasions (ROs) based on detected synchronization signal blocks (SSBs), wherein M is an integer greater than 1; and
sending preamble sequences on the M ROs, wherein the preamble sequences carry additional bits generated based on information bits.

2. The method according to claim 1, wherein the determining the M random access channel occasions (ROs) based on the detected synchronization signal blocks (SSBs) comprises:
selecting X SSBs from the detected SSBs at least based on synchronization signal-reference signal received powers (SS-RSRPs) of the detected SSBs, wherein X is an integer greater than or equal to 1, and X is preset, or configured by a network device, or agreed upon by a protocol, or determined by a terminal; and
determining the M ROs based on the X SSB and a mapping relationship between SSBs and ROs, wherein M is preset, or configured by a network device, or agreed upon by a protocol, or determined by a terminal.

3. The method according to claim 2, wherein if a number of ROs mapped by each SSB is 1/N, wherein N is less than 1, then the M ROs are equivalent to X/N ROs corresponding to the X SSBs.

4. The method according to claim 2, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

5. The method according to claim 3 or 4, wherein the X SSBs represent X SSBs with highest SS-RSRPs among all SSBs, or the X SSBs represent X SSBs whose SS-RSRPs exceed a preset threshold.

6. The method according to claim 2, wherein if a number of ROs mapped by each SSB is 1 and a number of SSBs mapped by each RO is N, wherein N is greater than or equal to 1, then X is 1, and the X SSBs represent one SSB with a highest SS-RSRP among all SSBs, or the X SSBs represent one SSB whose SS-RSRP exceeds a preset threshold;
wherein the determining the M ROs based on the X SSBs and the mapping relationship between the SSBs and the ROs comprises:
determining a first RO corresponding to the X SSBs based on the mapping relationship between the SSBs and the ROs; and
selecting consecutive M ROs starting from the first RO.

7. The method according to claim 2, wherein if a number of ROs mapped by each SSB is 1 and a number of SSBs mapped by each RO is N, wherein N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
wherein the determining the M ROs based on the X SSBs and the mapping relationship between the SSBs and the ROs comprises:
determining K ROs corresponding to the X SSBs based on the mapping relationship between the SSBs and the ROs, and if K is equal to M, determining the K ROs as the M ROs.

8. The method according to claim 7, further comprising:
if K is less than M, continuing to select an RO corresponding to an SSB with a highest SS-RSRP among other SSBs than the X SSBs until the M ROs are determined; or,
if K is less than M, selecting consecutive M-K ROs after the K ROs to obtain the M ROs.

9. The method according to claim 1 or 2, wherein the preamble sequences on the M ROs are the same, and the preamble sequences carry all information of the additional bits.

10. The method according to claim 1 or 2, wherein the preamble sequences on the M ROs are not completely the same, and each preamble sequence carries part of information of the additional bits.

11. The method according to claim 10, wherein the sending the preamble sequences on the M ROs comprises:
sending L preamble sequences on the M ROs, wherein L is a number of segments of the additional bits, and L is less than or equal to M, each preamble sequence in the L preamble sequences carries a segment of the additional bits, wherein L is preset, or configured by a network device, or agreed upon by a protocol, or determined by a terminal.

12. The method according to claim 11, wherein L is calculated based on M, or M is calculated based on L.

13. The method according to claim 1 or 2, wherein the information bits comprise user identity information and user data information.

14. A preamble sequence receiving method, **characterized by** comprising:
determining one or more RO combinations, wherein the RO combination comprises M ROs, wherein M is an integer greater than 1; and
performing reception processing of preamble sequences on each RO combination, wherein the preamble sequences carry additional bits generated based on information bits.

15. The method according to claim 14, wherein the determining the one or more RO combinations comprises:
determining one or more SSB combinations, wherein the SSB combination comprises X SSBs, wherein X is an integer greater than or equal to 1; and
determining the RO combination based on the X SSBs and a mapping relationship between SSBs and ROs.

16. The method according to claim 15, wherein
if a number of ROs mapped by each SSB is 1/N, wherein N is less than 1, then the M ROs represent X/N ROs corresponding to the X SSBs.

17. The method according to claim 15, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

18. The method according to claim 15, wherein if a number of ROs mapped by each SSB is 1 and a number of SSBs mapped by each RO is N, if greater than or equal to 1, then X is 1;
wherein the determining the RO combination based on the X SSBs and the mapping relationship between the SSBs and the ROs comprises:
determining a first RO corresponding to the X SSBs based on the mapping relationship between the SSBs and the ROs; and
selecting consecutive M ROs starting from the first RO.

19. The method according to claim 15, wherein if a number of ROs mapped by each SSB is 1 and a number of SSBs mapped by each RO is N, wherein N is greater than or equal to 1, then X is equal to M;
wherein the determining the RO combination based on the X SSBs and the mapping relationship between the SSBs and the ROs comprises:
determining K ROs corresponding to the X SSBs based on the mapping relationship between the SSBs and the ROs, and if K is equal to M, determining the K ROs as the M ROs.

20. The method according to claim 19, further comprising:
if K is less than M, continuing to select an RO corresponding to other SSB than the X SSBs, until the M ROs are determined; or,
if K is less than M, selecting consecutive M-K ROs after the K ROs to obtain the M ROs.

21. The method according to any one of claims 14 to 20, further comprises:
sending the number M of ROs to a terminal, wherein M is used to indicate sending the preamble sequences on M ROs.

22. The method according to any one of claims 15 to 20, further comprising:
sending the number X of SSBs to a terminal, wherein X is used to indicate determining M ROs for sending the preamble sequences based on X SSBs.

23. The method according to any one of claims 14 to 20, further comprising:
sending a number L of segments of the additional bits to a terminal, wherein L is an integer greater than 1, and L is used to indicate that each preamble sequence carries 1/L of the additional bits.

24. The method according to claim 23, wherein L is calculated based on M, or M is calculated based on L.

25. The method according to any one of claims 15 to 20, further comprising:
solving for the additional bits carried by the preamble sequences after receiving the preamble sequences.

26. The method according to any one of claims 14 to 20, wherein the information bits comprise user identity information and user data information.

27. A preamble sequence sending apparatus, **characterized by** comprising: a memory, a transceiver and a processor, wherein
the memory is configured to store a computer program;
the transceiver is configured to send and receive data under control of the processor;
the processor is configured to read the computer program stored in the memory and execute the following operations:
determining M random access channel occasions (ROs) based on detected synchronization signal blocks (SSBs), wherein M is an integer greater than 1; and
sending preamble sequences on the M ROs, wherein the preamble sequences carry additional bits generated based on information bits.

28. The apparatus according to claim 27, wherein the processor is configured to execute the following operations:
selecting X SSBs from the detected SSBs at least based on synchronization signal-reference signal received powers (SS-RSRPs) of the detected SSBs, wherein X is an integer greater than or equal to 1, and X is preset, or configured by a network device, or agreed upon by a protocol, or determined by a terminal; and
determining the M ROs based on the X SSBs and a mapping relationship between SSBs and ROs, wherein M is preset, or configured by a network device, or agreed upon by a protocol, or determined by a terminal.

29. The apparatus according to claim 28, wherein if a number of ROs mapped by each SSB is 1/N, wherein N is less than 1, then the M ROs represent X/N ROs corresponding to the X SSBs.

30. The apparatus according to claim 28, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

31. The apparatus according to claim 29 or 30, wherein the X SSBs represent X SSBs with highest SS-RSRPs among all SSBs, or the X SSBs represent X SSBs whose SS-RSRPs exceed a preset threshold.

32. The apparatus according to claim 28, wherein if a number of ROs mapped by each SSB is 1 and a number of SSBs mapped by each RO is N, wherein N is greater than or equal to 1, then X is 1, and the X SSBs represent one SSB with a highest SS-RSRP among all SSBs, or the X SSBs represent one SSB whose SS-RSRP exceeds a preset threshold;
wherein the processor is configured to execute the following operations:
determining a first RO corresponding to the X SSBs based on the mapping relationship between the SSBs and the ROs; and
selecting consecutive M ROs starting from the first RO.

33. The apparatus according to claim 28, wherein if a number of ROs mapped by each SSB is 1 and a number of SSBs mapped by each RO is N, wherein N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
wherein the processor is configured to execute the following operation:
determining K ROs corresponding to the X SSBs based on the mapping relationship between the SSBs and the ROs, and if K is equal to M, determining the K ROs as the M ROs.

34. The apparatus according to claim 33, wherein the processor is configured to execute the following operations:
if K is less than M, continuing to select an RO corresponding to an SSB with a highest SS-RSRP among the other SSBs than the X SSBs until the M ROs are determined; or,
if K is less than M, selecting consecutive M-K ROs after the K ROs to obtain the M ROs.

35. The apparatus according to claim 27 or 28, wherein the preamble sequences on the M ROs are the same, and the preamble sequences carry all information of the additional bits.

36. The apparatus according to claim 27 or 28, wherein the preamble sequences on the M ROs are not completely the same, and each preamble sequence carries part of information of the additional bits.

37. The apparatus according to claim 36, wherein the processor is configured to execute the following operation:
sending L preamble sequences on the M ROs, wherein L is a number of segments of the additional bits, and L is less than or equal to M, each preamble sequence in the L preamble sequences carries a segment of the additional bits, wherein L is preset, or configured by a network device, or agreed upon by a protocol, or determined by a terminal.

38. The apparatus according to claim 37, wherein L is calculated based on M, or M is calculated based on L.

39. The apparatus according to claim 27 or 28, wherein the information bits comprise user identity information and user data information.

40. A preamble sequence receiving apparatus, **characterized by** comprising: a memory, a transceiver and a processor, wherein
the memory is configured to store a computer program;
the transceiver is configured to send and receive data under control of the processor;
the processor is configured to read the computer program stored in the memory and execute the following operations:
determining one or more RO combinations, wherein the RO combination comprises M ROs, wherein M is an integer greater than 1; and
performing reception processing of preamble sequences on each RO combination, wherein the preamble sequences carry additional bits generated based on information bits.

41. The apparatus according to claim 40, wherein the processor is configured to execute the following operations:
determining one or more SSB combinations, wherein the SSB combination comprises X SSBs, wherein X is an integer greater than or equal to 1; and
determining the RO combination based on the X SSBs and a mapping relationship between SSBs and ROs.

42. The apparatus according to claim 41, wherein if a number of ROs mapped by each SSB is 1/N, wherein N is less than 1, then the M ROs represent X/N ROs corresponding to the X SSBs.

43. The apparatus according to claim 41, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

44. The apparatus according to claim 41, wherein if a number of ROs mapped by each SSB is 1 and the number of SSBs mapped by each RO is N, wherein N is greater than or equal to 1, then X is 1;
wherein the processor is configured to execute the following operations:
determining a first RO corresponding to the X SSBs based on the mapping relationship between the SSBs and the ROs; and
selecting consecutive M ROs starting from the first RO.

45. The apparatus according to claim 41, wherein if a number of ROs mapped by each SSB is 1 and a number of SSBs mapped by each RO is N, wherein N is greater than or equal to 1, then X is equal to M;
wherein the processor is configured to execute the following operation:
determining K ROs corresponding to the X SSBs based on the mapping relationship between the SSBs and the ROs, and if K is equal to M, determining the K ROs as the M ROs.

46. The apparatus according to claim 45, wherein the processor is configured to execute the following operations:
if K is less than M, continuing to select an RO corresponding to other SSB than the X SSBs, until the M ROs are determined; or,
if K is less than M, selecting consecutive M-K ROs after the K ROs to obtain the M ROs.

47. The apparatus according to any one of claims 40 to 46, wherein the processor is configured to execute the following operation:
sending the number M of ROs to a terminal, wherein M is used to indicate sending the preamble sequences on M ROs.

48. The apparatus according to any one of claims 41 to 46, wherein the processor is configured to execute the following operation:
sending the number X of SSBs to a terminal, wherein X is used to indicate determining M ROs for sending the preamble sequences based on X SSBs.

49. The apparatus according to any one of claims 40 to 46, wherein the processor is configured to execute the following operation:
sending a number L of segments of the additional bits to a terminal, wherein L is an integer greater than 1, and L is used to indicate that each preamble sequence carries 1/L of the additional bits.

50. The apparatus according to claim 49, wherein L is calculated based on M, or M is calculated based on L.

51. The apparatus according to any one of claims 41 to 46, wherein the processor is configured to execute the following operation:
solving for the additional bits carried by the preamble sequences after receiving the preamble sequences.

52. The apparatus according to any one of claims 40 to 46, wherein the information bits comprise user identity information and user data information.

53. A preamble sequence sending apparatus, **characterized by** comprising:
a processing unit, configured to determine M random access channel occasions (ROs) based on detected synchronization signal blocks (SSBs), wherein M is an integer greater than 1; and
a sending unit, configured to send preamble sequences on the M ROs, wherein the preamble sequences carry additional bits generated based on information bits.

54. The apparatus according to claim 53, wherein the processing unit is configured to:
select X SSBs from the detected SSBs at least based on synchronization signal-reference signal received powers (SS-RSRPs) of the detected SSBs, wherein X is an integer greater than or equal to 1, and X is preset, or configured by a network device, or agreed upon by a protocol, or determined by a terminal; and
determine the M ROs based on the X SSBs and a mapping relationship between SSBs and ROs, wherein M is preset, or configured by a network device, or agreed upon by a protocol, or determined by a terminal.

55. The apparatus according to claim 54, wherein if a number of ROs mapped by each SSB is 1/N, wherein N is less than 1, then the M ROs represent X/N ROs corresponding to the X SSBs.

56. The apparatus according to claim 54, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

57. The apparatus according to claim 55 or 56, wherein the X SSBs represent X SSBs with highest SS-RSRPs among all SSBs, or the X SSBs represent X SSBs whose SS-RSRPs exceed a preset threshold.

58. The apparatus according to claim 54, wherein if a number of ROs mapped by each SSB is 1 and a number of SSBs mapped by each RO is N, wherein N is greater than or equal to 1, then X is 1, and the X SSBs represent one SSB with a highest SS-RSRP among all SSBs, or the X SSBs represent one SSB whose SS-RSRP exceeds a preset threshold;
wherein the processing unit is configured to:
determine a first RO corresponding to the X SSBs based on the mapping relationship between the SSBs and the ROs; and
select consecutive M ROs starting from the first RO.

59. The apparatus according to claim 54, wherein if a number of ROs mapped by each SSB is 1 and a number of SSBs mapped by each RO is N, wherein N is greater than or equal to 1, then X is equal to M, and the X SSBs represent M SSBs corresponding to M highest SS-RSRPs among all SSBs, or the X SSBs represent M SSBs whose SS-RSRPs exceed a preset threshold;
wherein the processing unit is configured to:
determine K ROs corresponding to the X SSBs based on the mapping relationship between the SSBs and the ROs, and if K is equal to M, determine the K ROs as the M ROs.

60. The apparatus according to claim 59, wherein the processing unit is configured to:
if K is less than M, continue to select an RO corresponding to an SSB with a highest SS-RSRP among other SSBs than the X SSBs until the M ROs are determined; or,
if K is less than M, select consecutive M-K ROs after the K ROs to obtain the M ROs.

61. The apparatus according to claim 53 or 54, wherein the preamble sequences on the M ROs are the same, and the preamble sequences carry all information of the additional bits.

62. The apparatus according to claim 53 or 54, wherein the preamble sequences on the M ROs are not completely the same, and each preamble sequence carries part of information of the additional bits.

63. The apparatus according to claim 62, wherein the sending unit is configured to:
send L preamble sequences on the M ROs, wherein L is a number of segments of the additional bits, and L is less than or equal to M, each preamble sequence in the L preamble sequences carries a segment of the additional bits, wherein L is preset, or configured by a network device, or agreed upon by a protocol, or determined by a terminal.

64. The apparatus according to claim 63, wherein L is calculated based on M, or M is calculated based on L.

65. The apparatus according to claim 53 or 54, wherein the information bits comprise user identity information and user data information.

66. A preamble sequence receiving apparatus, **characterized by** comprising:
a processing unit, configured to determine one or more RO combinations, wherein the RO combination comprises M ROs, wherein M is an integer greater than 1; and
a receiving unit, configured to perform reception processing of preamble sequences on each RO combination, wherein the preamble sequences carry additional bits generated based on information bits.

67. The apparatus according to claim 66, wherein the processing unit is configured to:
determine one or more SSB combinations, wherein the SSB combination comprises X SSBs, wherein X is an integer greater than or equal to 1; and
determine the RO combination based on the X SSBs and a mapping relationship between SSBs and ROs.

68. The apparatus according to claim 67, wherein if a number of ROs mapped by each SSB is 1/N, wherein N is less than 1, then the M ROs represent X/N ROs corresponding to the X SSBs.

69. The apparatus according to claim 67, wherein if a number of ROs mapped by each SSB is 1/N, wherein N is less than 1, then X is equivalent to M divided by 1/N and rounded up to a nearest integer, and the M ROs represent M ROs in X/N ROs corresponding to the X SSBs.

70. The apparatus according to claim 67, wherein if a number of ROs mapped by each SSB is 1 and a number of SSBs mapped by each RO is N, wherein N is greater than or equal to 1, then X is 1;
wherein the processing unit is configured to:
determine a first RO corresponding to the X SSBs based on the mapping relationship between the SSBs and the ROs; and
select consecutive M ROs starting from the first RO.

71. The apparatus according to claim 67, wherein if a number of ROs mapped by each SSB is 1 and a number of SSBs mapped by each RO is N, wherein N is greater than or equal to 1, then X is equal to M;
wherein the processing unit is configured to:
determine K ROs corresponding to the X SSBs based on the mapping relationship between the SSBs and the ROs, and if K is equal to M, determine the K ROs as the M ROs.

72. The apparatus according to claim 71, wherein the processing unit is configured to:
if K is less than M, continue to select an RO corresponding to other SSB than the X SSBs, until the M ROs are determined; or,
if K is less than M, select consecutive M-K ROs after the K ROs to obtain the M ROs.

73. The apparatus according to any one of claims 66 to 72, further comprising:
a first sending unit, configured to send the number M of ROs to a terminal, wherein M is used to indicate sending the preamble sequences on M ROs.

74. The apparatus according to any one of claims 67 to 72, further comprising:
a second sending unit, configured to send the number X of SSBs to a terminal, wherein X is used to indicate determining M ROs for sending the preamble sequences based on X SSBs.

75. The apparatus according to any one of claims 66 to 72, further comprising:
a third sending unit, configured to send a number L of segments of the additional bits to a terminal, wherein L is an integer greater than 1, and L is used to indicate that each preamble sequence carries 1/L of the additional bits.

76. The apparatus according to claim 75, wherein L is calculated based on M, or M is calculated based on L.

77. The apparatus according to any one of claims 67 to 72, wherein the processing unit is configured to:
solve for the additional bits carried by the preamble sequences after receiving the preamble sequences.

78. The apparatus according to any one of claims 66 to 72, wherein the information bits comprise user identity information and user data information.

79. A computer-readable storage medium, having a computer program stored therein, wherein the computer program is configured to enable a computer to execute the method according to any one of claims 1 to 26.
